# EUROPÄISCHE PATENTSCHRIFT

(11) **EP 4 454 952 B1**
(45) Veröffentlichungstag und Bekanntmachung des Hinweises auf die Patenterteilung: **11.11.2026**
(21) Anmeldenummer: 24172656.1
(22) Anmeldetag: 26.04.2024
(51) Int. Cl.: B60R 7/04, B60R 7/08, B60R 11/06

(54) **KFZ-TABLAR MIT WENIGSTENS EINER EINSEITIG ÜBERWINDBAREN RASTNASE ALS SICHERUNGSANSCHLAG**
MOTOR VEHICLE TRAY WITH AT LEAST ONE LATCH LUG WHICH CAN BE OVERTURN ON ONE SIDE AS A SAFETY STOP
CHARIOT DE VÉHICULE AUTOMOBILE DOTÉ D'AU MOINS UNE ENCLIQUETAGE SURBOBINABLE D'UN CÔTÉ COMME BUTÉE DE SÉCURITÉ

(30) Priorität: 26.04.2023 DE 102023110797
(43) Veröffentlichungstag der Anmeldung: 30.10.2024
(73) Patentinhaber: Aluca GmbH, 74538 Rosengarten (DE)
(72) Erfinder: Heß, Gerhard, 74523 Schwäbisch Hall (DE)
(74) Vertreter: Ruttensperger Lachnit Trossin Gomoll

(56) Entgegenhaltungen:
- DE-U- 7 001 877
- DE-U1- 202013 005 791
- DE-U1- 8 534 770
- US-A1- 2014 354 001

## Beschreibung

Die vorliegende Erfindung betrifft eine Verstauungsvorrichtung mit den Merkmalen des Oberbegriffs des Anspruchs 1.

Eine solche Verstauungsvorrichtung ist aus der US 2014/0354001 A1 bekannt.

Eine derartige Verstauungsvorrichtung dient zur entnehmbaren Verstauung eines Gegenstands, insbesondere eines Transportbehälters, wie etwa eines Transportkoffers oder einer Transportkiste, in Kraftfahrzeugen, wobei die Verstauungsvorrichtung umfasst:
- einen Vorrichtungsrahmen und
- ein an dem Vorrichtungsrahmen beweglich angeordnetes Tablar.

Derartige Verstauungsvorrichtungen sind an Handwerkerfahrzeugen sowie an Einsatzfahrzeugen von Feuerwehr, Sanitätsdienst und dem Technischen Hilfswerk hinreichend bekannt, um nur einige Beispiele zu nennen. Die Verstauungsvorrichtungen dienen dem sicheren Mitführen von Werkzeug oder/und Geräten oder/und Material in Kraftfahrzeugen.

Das Tablar ist im allgemeinsten Sinn ein ausziehbarer Fachboden. Das Tablar stellt eine Auflagefläche zur Auflage eines Transportbehälters bereit. Es bildet an der Verstauungsvorrichtung ein Fach mit einem über der Auflagefläche des Tablars gelegenen Aufnahmeraum. Das Tablar ist längs einer Auszugsbahn zwischen einer aus dem Vorrichtungsrahmen ausgezogenen Entnahmeposition und einer in den Vorrichtungsrahmen eingefahrenen Verstauungsposition verstellbar. Das Tablar ist in einer Auszugsrichtung von der Verstauungsposition in die Entnahmeposition verstellbar und ist in einer von der Auszugsrichtung verschiedenen, vorzugsweise entgegengesetzten, Einschubrichtung in die von der Entnahmeposition in die Verstauungsposition verstellbar. In der Entnahmeposition kann ein Gegenstand, wie etwa der oben genannte Transportbehälter, von der Auflagefläche des Tablars entnommen werden. Gewünschtenfalls kann auch ein Gegenstand in der Entnahmeposition des Tablars auf dessen Auflagefläche aufgelegt werden.

In der Verstauungsposition des Tablars sollte ein darauf aufgelegter Gegenstand sicher verstaut sein, so dass der verstaute Gegenstand durch die während einer Fahrt des die Verstellungsvorrichtung tragenden Fahrzeugs üblicherweise auftretenden dynamischen Kräfte nicht aus dem Aufnahmeraum über dem Tablar entweichen kann.

Daher weist das Tablar zur Begrenzung einer Bewegung eines auf die Auflagefläche aufgelegten Gegenstands, wie etwa des oben genannten Transportbehälters, in der Auszugsrichtung in einem in der Auszugsrichtung vorauseilenden Endbereich des Tablars eine über die Auflagefläche hinaus vorstehende körperliche Anschlaganordnung auf. Die Anschlaganordnung dient als körperliche Barriere, um die Bewegung eines Gegenstands, welcher auf die Auflagefläche des in der Verstauungsposition verbleibenden Tablars aufgelegt ist, relativ zum Tablar wenigstens in Auszugsrichtung zu begrenzen.

Selbstverständlich kann das Tablar auch in anderen Richtungen körperliche Bewegungsbegrenzungen aufweisen. Jedoch ist ein Verlassen des Fachs mit dem Aufnahmeraum über der Auflagefläche in der Verstauungsposition des Tablars in anderen Richtungen als der Auszugsrichtung weniger kritisch, da in Richtungen quer oder entgegengesetzt zur Auszugsrichtung in der Regel Abschnitte des Vorrichtungsrahmens oder Abschnitte von der Verstauungsvorrichtung benachbarten Ordnungs- und Verstauungssystemen oder Abschnitte einer Wand des die Verstauungsvorrichtung tragenden Fahrzeugs den Bewegungsraum des verstauten Gegenstands begrenzen.

Das vom Tablar gebildete Fach mit dem Aufnahmeraum über der Auflagefläche ist jedoch in der Verstauungsposition des Tablars in Auszugsrichtung offen, so dass hier die Anschlaganordnung notwendig ist, um den auf dem Tablar verstauten Gegenstand während einer Fahrt zu sichern.

An nicht ausziehbaren, starren Fachböden wird eine Verstauungssicherung von auf den jeweiligen Fachboden aufgelegten Gegenständen in Fahrzeugen in manchen Ausführungsformen auch dadurch erreicht, dass der Fachboden um eine Neigeachse geneigt angeordnet ist, welche zu einem horizontalen ebenen Aufstandsuntergrund eines die Verstauungsvorrichtung tragenden Kraftfahrzeugs parallel ist, so dass der verstaute Gegenstand durch die Schwerkraft in dem durch das Fachboden gebildete Fach gehalten wird. Die während einer Fahrt auftretenden dynamischen Kräfte müssten dann so groß sein, dass der Gegenstand über den erhöhten Entnahmerand des Fachboden, über welchen hinweg eine Entnahme des Gegenstands aus dem Fach erfolgt, klettert.

Diese Lösung ist jedoch bei ausziehbaren Fachboden, also bei den vorliegend diskutierten Tablaren, nicht praktikabel, da eine entsprechende Neigung des Tablars sein Ausziehen in die Entnahmeposition erschwert und eine Lagesicherung des Tablars in der Entnahmeposition erforderlich macht, um zu verhindern, dass das Tablar nicht schwerkraftgetriebenen von alleine in die Verstauungsposition zurückkehrt.

Außerdem geht durch die geneigte Anordnung von Fachböden wertvoller Stauraum im Fahrzeug verloren.

In der Regel ist über dem Tablar der Verstauungsvorrichtung ein weiteres Ordnungsbauteil angeordnet, wie etwa ein weiteres Tablar, ein starrer Fachboden, eine Lade und dergleichen, so dass der auf bekannten Tablaren zu verstauende Gegenstand nur in der Entnahmeposition des Tablars auf diesen aufgelegt und von diesem abgenommen werden kann.

Außerdem werden mechanisch hochwertige Tablare aufgrund des gewünschten geringen Gewichts bei gleichzeitig hoher Stabilität und Tragfähigkeit bevorzugt aus Aluminiumblech als Biegeteil hergestellt. Die Anschlaganordnung ist dann häufig einstückig mit dem die Auflagefläche ausbildenden Teil des Aluminiumblechs verbunden, wobei die in Auszugsrichtung weisende Seite der Anschlaganordnung Sichtseite des Tablars ist. Die Biegeumformung des Aluminiumblechs zur Ausbildung der Anschlaganordnung erhöht das Risiko, auf der Sichtfläche der Anschlaganordnung Kratzer zu erzeugen, die zum Ausschuss des Bauteils führen.

Es ist daher vor dem Hintergrund der oben genannten Nachteile Aufgabe der vorliegenden Erfindung die eingangs genannte Verstauungsvorrichtung derart weiterzubilden, dass sie einfacher handzuhaben und mit verbesserter Effizienz bei gleicher Tragfähigkeit in hochwertiger Ausführung herstellbar ist.

Die DE 7001877 U offenbart einen in einem Fahrzeug anordenbaren Fachboden zur Aufnahme eines Gegenstands, wie etwa eines Sanitätkastens. Dieser Fachboden ist nicht relativ zu einem Vorrichtungsrahmen in einer Auszugsrichtung verstellbar. Der Fachboden ist relativ zum Vorrichtungsrahmen durch Schrauben oder Kleben fixiert.

Der aus der DE 7001877 U bekannte Fachboden und der darauf anordenbare Gegenstand weisen zusammenwirkende komplementäre Führungsformationen auf, durch welche der Gegenstand in eine durch die Führungsformationen definierte Richtung vom Fachboden abgezogen werden kann, wenn eine aufgrund ihrer Bauteilelastizität in die Verriegelungsstellung vorgespannte Verriegelungszunge des Fachbodens manuell aus dem Bewegungsweg des Gegenstands bewegt wurde.

Die DE 85 34 770 U1 offenbart einen an einem Lkw hängend anordenbaren Staukasten mit einem frontalen Klappdeckel. Die DE 85 34 770 U1 offenbart weder ein relativ zu einem Vorrichtungsrahmen ausziehbares Tablar noch eine bezüglich einer Auflagefläche eines ohnehin nicht offenbarten Tablars vorstehende Anschlaganordnung.

Die DE 20 2013 005 791 U1 offenbart einen zur Anordnung in einem Fahrzeug bestimmten Korpus, aus welchem arretierbare Laden ausziehbar sind. Die DE 20 2013 005 791 U1 offenbart keine relativ zur Auflagefläche der Schubladen zwischen einer Sicherungsstellung und einer Freigabestellung verlagerbare Anschlaganordnung.

Die oben genannte Aufgabe löst die vorliegende Erfindung an einer gattungsgemäßen Verstauungsvorrichtung dadurch, dass die Anschlaganordnung relativ zur Auflagefläche verlagerbar ist zwischen einer stärker vorstehenden Sicherungsstellung und einer weniger stark vorstehenden Freigabestellung. In der Sicherungsstellung steht die Anschlaganordnung daher stärker bezüglich der Auflagefläche vor als in der Freigabestellung.

Die aus dem Stand der Technik bekannten Anschlaganordnungen sind starr und bisweilen sogar einstückig mit der Auflagefläche des Tablars verbunden. Durch die relativ zur Auflagefläche verlagerbare Ausbildung der Anschlaganordnung kann für manche Handlungen, insbesondere für die Beladung des Tablars mit einem Gegenstand, anstelle des gesamten Tablars nur die Anschlaganordnung bewegt werden, nämlich verlagernd von ihrer Sicherungsstellung in die Freigabestellung. Durch Anordnung einer beweglichen Anschlaganordnung an dem Tablar kann außerdem die qualitätskritische Biegeumformung entfallen, was ermöglicht, das Ausschussrisiko bei der Herstellung der vorliegend diskutierten Verstauungsvorrichtung erheblich zu verringern. Das Tablar kann daher weiterhin bevorzugt durch Biegeumformung aus einem Metallblech, insbesondere Aluminiumblech hergestellt werden.

In der Regel sind das durch das Tablar der vorliegenden diskutierten Verstauungsvorrichtung gebildete Fach und der diesem Fach zugeordnete Aufnahmeraum aufgrund der das Tablar umgebenden Einbausituation nur von einer nachfolgend als "Vorderseite" bezeichneten Seite der Verstauungsvorrichtung entgegen der Auszugsrichtung zugänglich. An dieser Vorderseite ist das Fach wesensgemäß offen. Da die Anschlaganordnung einen auf dem Tablar verstauten Gegenstand gegen ein Herausrutschen aus dem Fach in Auszugsrichtung während einer Fahrt sichern soll, ist bevorzugt vorgesehen, dass der in das Fach einzuladende Gegenstand dann, wenn die Anschlaganordnung sich in der Freigabestellung befindet, über die Anschlaganordnung hinweg entgegen der Auszugsrichtung in das Fach eingeschoben werden kann. Das Tablar kann dabei in der Verstauungsposition verbleiben. Hierdurch kann ein Ausziehen des Tablars aus der Verstauungsposition zum Beladen seiner Auflagefläche entfallen, wenngleich ein Beladen des in die Entnahmeposition ausgezogenen Tablars weiterhin nicht ausgeschlossen ist.

In an sich bekannter Weise ist das Tablar üblicherweise durch handelsübliche Auszüge in und entgegen der Auszugsrichtung bewegbar mit dem Vorrichtungsrahmen verbunden. Die Auszüge weisen eine Positionssicherung des Auszugs und damit des mit ihm verbundenen Tablars wenigstens in der Verstauungsposition auf. Das Tablar ist daher in der Regel mit einer ebenfalls an sich bekannten Lösevorrichtung versehen, deren Betätigung die in den Auszügen realisierte Positionssicherung des Tablars löst und eine Verstellung des Tablars wenigstens von der Verstauungsposition in die Entnahmeposition gestattet.

Bevorzugt ist das Tablar wenigstens ausgehend von der Verstauungsposition, besonders bevorzugt zwischen der Verstauungsposition und der Entnahmeposition, noch stärker bevorzugt überhaupt, nur längs der Auszugsbahn in Auszugsrichtung verstellbar.

Um sicherzugehen, dass ein auf der Auflagefläche des in der Verstauungsposition angeordneten Tablars aufgelegter und somit verstauter Gegenstand auch bei weniger achtsamer Handhabung der Verstauungsvorrichtung durch eine abgelenkte oder zerstreute Bedienperson gegen ein Herausrutschen aus dem Fach gesichert ist, ist bevorzugt daran gedacht, dass die Anschlaganordnung in die Sicherungsstellung vorbelastet ist. Die Vorbelastung kann durch eine gesonderte Federvorrichtung, wie einer Schrauben- oder/und Blattfeder, oder durch einen elastischen Elastomerkörper bewirkt sein.

Somit kann die Anschlaganordnung gegen ihre Vorbelastung aus der Sicherungsstellung in die Freigabestellung verlagert werden, wobei sie bei Fortfall der Verlagerungskraft durch ihre Vorbelastung getrieben selbsttätig in die Sicherungsstellung zurückkehrt.

Besonders vorteilhaft ist es, wenn die die Anschlaganordnung aus der Sicherungsstellung in die Freigabestellung verlagernde Kraft durch den zu verstauenden Gegenstand ausgeübt werden kann. Dann kann der zu verstauende Gegenstand, beispielsweise ein Transportkoffer, eine Transportkiste, eine Transportschale oder ein anderer Transportkörper in das durch das Tablar gebildete Fach entgegen der Auszugsrichtung eingeschoben werden, wenn sich das Tablar positionsgesichert in seiner Verstauungsposition befindet. Dies kann dadurch erreicht werden, dass die Anschlaganordnung eine in die Auszugsrichtung weisende Betätigungsschräge aufweist. Zur Sicherung des verstauten Gegenstands gegen ein Herausrutschen aus dem Fach in Auszugsrichtung weist die Anschlaganordnung bevorzugt eine entgegen der Auszugsrichtung weisende Sicherungsstruktur auf.

Durch die Betätigungsschräge kann die Kraft, mit welcher der Gegenstand in das Fach entgegen der Auszugsrichtung eingeschoben wird, in eine Verlagerungskraft umgesetzt werden, welche eine Verlagerung der Anschlaganordnung in die Freigabestellung bewirkt. Bei vorgegebener Einschubkraft des zu verstauenden Gegenstands hängt die durch sie bewirkte Verlagerungskraft von der Neigung der Betätigungsschräge in der Sicherungsstellung ab. Aus offensichtlichen Gründen sollte hier eine Selbsthemmung vermieden werden. Versuche haben gezeigt, dass unabhängig von den zur Bildung des zu verstauenden Gegenstands und der Betätigungsschräge verwendeten Materialien in der Sicherungsstellung der Anschlaganordnung bzw. des Anschlagbauteils ein Neigungswinkel der Betätigungsschräge im Bereich von 18° bis 32°, bevorzugt im Bereich von 22° bis 28°, besonders bevorzugt von 25°, eine zuverlässige Verlagerbarkeit der Anschlaganordnung durch den zu verstauenden Gegenstand aus der Sicherungsstellung in die Freigabestellung ermöglicht.

Sobald der zu verstauende Gegenstand, welcher während seines Verstauungsvorgangs durch seine Gewichtskraft, nötigenfalls unterstützt durch von der verstauenden Bedienperson ausgeübte Druckkraft, entgegen der Auszugsrichtung über die Anschlaganordnung, insbesondere über ein die Bedienschräge tragendes Bauteil, vollständig hinwegbewegt wurde, nimmt die Anschlaganordnung, unbehindert durch den Gegenstand, ihre Sicherungsstellung ein und verhindert fortan ein unbeabsichtigtes Herausrutschen des verstauten Gegenstands aus dem Fach.

Hemmung, auch Selbsthemmung, der Anschlaganordnung ist dagegen erwünscht, wenn der verstaute Gegenstand in Auszugsrichtung gegen die Sicherungsstruktur gedrückt wird, um den Gegenstand sicher in dem Fach zu halten.

Daher ist gemäß einer bevorzugten Weiterbildung der vorliegenden Erfindung vorgesehen, dass in der Sicherungsstellung der Anschlaganordnung bzw. des Anschlagbauteils die Steigung der Betätigungsschräge und die Gestalt der Sicherungsstruktur einerseits und die Belastungswirkung der Anschlaganordnung in die Sicherungsstellung andererseits derart abgestimmt ist, dass ein Kraftbetragsbereich existiert, für welchen gilt, dass die Anschlaganordnung durch eine Ausübung einer Kraft auf die Betätigungsschräge entgegen der Auszugsrichtung mit einem in dem Kraftbetragsbereich liegenden Kraftbetrag aus der Sicherungsstellung in die Freigabestellung verlagerbar ist, durch Ausübung einer betragsgleichen entgegengesetzt gerichteten Kraft auf die Sicherungsstruktur jedoch nicht.

Die Sicherungsstruktur kann eine beliebige körperliche Struktur sein, wie etwa eine Kante oder ein Rand eines Anschlagbauteils der Anschlaganordnung. Bei bevorzugter Ausbildung der Sicherungsstruktur als eine Sicherungsflanke eines Anschlagbauteils kann die Sicherungsstruktur mit einer im Vergleich zu einem Bauteilrand oder einer Bauteilkante mit einer verhältnismäßig großen Kontaktfläche zum Kontakt mit dem verstauten Gegenstand aufweisen, so dass im Kontaktfall verhältnismäßig kleine Flächenpressungen auf die beteiligten Bauteile wirken. Zur Sicherstellung der Sicherungswirkung der Sicherungsflanke weist die Sicherungsflanke bezüglich der Auflagefläche oder bezüglich der Auszugsrichtung bevorzugt eine betragsmäßig größere Steigung auf als die Betätigungsschräge.

In einer bevorzugten Ausführungsform der Erfindung umfasst die Anschlaganordnung wenigstens ein oben bereits genanntes Anschlagbauteil. Bevorzugt weist das Anschlagbauteil die Betätigungsschräge und die Sicherungsstruktur auf, wobei die Sicherungsstruktur aus den oben genannten Gründen bevorzugt eine Sicherungsflanke ist. Die Betätigungsschräge und die Sicherungsflanke weisen in entgegengesetzte Richtungen. Dies soll keinesfalls bedeuten, dass die Betätigungsschräge und die Sicherungsflanke zueinander parallel sein müssen. Vielmehr weisen die Betätigungsschräge und die Sicherungsflanke dann in entgegengesetzte Richtungen, wenn ihr Normalenvektor parallele, aber entgegengesetzt gerichtete Komponenten aufweist. Die Richtung der Komponenten verläuft längs und entgegen der Auszugsrichtung.

Wenn in der vorliegenden Anmeldung von der Freigabestellung und der Sicherungsstellung der Anschlaganordnung die Rede ist, bedeutet dies für die bevorzugte Ausführungsform mit Anschlagbauteil eine Freigabestellung und eine Sicherungsstellung des Anschlagbauteils.

Eine besonders vorteilhafte, weil feine Abstimmung der für die Verstellung des Anschlagbauteils von der Sicherungsstellung in die Freigabestellung notwendigen Verlagerungskraft bzw. der Vorbelastung des Anschlagbauteils in die Sicherungsstellung kann dadurch erreicht werden, dass das Anschlagbauteil um eine Schwenkachse schwenkbar zwischen der Sicherungsstellung und der Freigabestellung verlagerbar ist. Dann nämlich kann die Vorbelastung des Anschlagbauteils nicht nur durch Auswahl eines Federbauteils mit vorbestimmter Federhärte sondern auch durch Auswahl des Abstands des Federbauteils von der Schwenkachse eingestellt werden. Die Schwenkachse verläuft bevorzugt orthogonal zur Auszugsrichtung und besonders bevorzugt parallel zur Auflagefläche.

Um besonders einfach gewährleisten zu können, dass ein zu verstauender Gegenstand im Wesentlichen unbehindert von der Anschlaganordnung in das vom Tablar gebildete Fach entgegen der Auszugsrichtung eingeschoben werden kann, während sich das Tablar in der Verstauungsposition befindet, kann ein Schwenkgelenk des Anschlagbauteils unabhängig von der Betriebsstellung der Anschlaganordnung näher bei einem in Auszugsrichtung vorauseilenden Rand des Tablars gelegen sein als die Sicherungsstruktur.

Bevorzugt ist die Betätigungsschräge wenigstens in der Sicherungsstellung, bevorzugt auch in der Freigabestellung, zwischen dem Schwenkgelenk des Anschlagbauteils und der Sicherungsstruktur gelegen. Dann trifft bei in der Verstauungsposition angeordnetem Tablar ein entgegen der Auszugsrichtung in das Fach zur Verstauung eingeschobener Gegenstand sicher auf die Betätigungsschräge. Die Bewegung des Gegenstands entgegen der Auszugsrichtung bewirkt beim Auftreffen des Gegenstands auf die Betätigungsschräge ein Verlagerungsmoment, welches das Anschlagbauteil aus der Sicherungsstellung in die Freigabestellung verlagert.

Dann, wenn der eingeschobene Gegenstand vollständig über das Anschlagbauteil hinweg bewegt wurde und auf der Auflagefläche aufliegt, wird das Anschlagbauteil, wie oben bereits beschrieben, durch seine Vorbelastung zurück in die Sicherungsstellung verlagert und sichert den Gegenstand im Fach.

Für eine besonders sichere Verankerung des Anschlagbauteils und damit für eine ausreichend hohe Fähigkeit zur Aufnahme äußerer Kräfte entgegen der Auszugsrichtung ist das Anschlagbauteil bevorzugt in eine Öffnung im Tablar eingesetzt. Bevorzugt läuft also Material des Tablars vollständig um das Anschlagbauteil um. Dies gilt insbesondere dann, wenn sich das Anschlagbauteil in der Freigabestellung befindet, jedoch bevorzugt auch dann, wenn sich das Anschlagbauteil in der Sicherungsstellung befindet.

Grundsätzlich kann daran gedacht sein, dass Anschlagbauteil unmittelbar an dem Tablar schwenkbar zu lagern, beispielsweise an einstückig mit dem Material des Tablars ausgebildeten und aufgrund von Biegeumformung von der Auflagefläche weg abstehenden Laschen des Tablars. Bevorzugt umfasst die Anschlaganordnung jedoch wenigstens ein Anschlaggehäuse, in welchem das Anschlagbauteil um seine Schwenkachse schwenkbar aufgenommen ist. Das Anschlagbauteil kann dann in seiner Freigabestellung in dem Anschlaggehäuse aufgenommen sein, sodass das sicherheitsrelevante Anschlagbauteil gut vor äußeren Einwirkungen geschützt ist. In der Sicherungsstellung kragt es aus dem Anschlaggehäuse aus.

Zu Vereinfachung der Herstellung des Tablars ist gemäß einer bevorzugten Weiterbildung der Erfindung daran gedacht, dass die Anschlaganordnung wenigstens eine vormontierte Anschlagbaueinheit umfasst, welche wenigstens das Anschlaggehäuse, das Anschlagbauteil, ein Vorspannmittel zur Vorbelastung des Anschlagbauteils in die Sicherungsstellung und eine Bewegungsbegrenzung zur Begrenzung einer Relativbewegung des Anschlagbauteils relativ zum Anschlaggehäuse aufweist.

Bevorzugt weist die Anschlaganordnung mehr als ein Anschlagbauteil, etwa 2, 3 oder 4 Anschlagbauteile auf, besonders bevorzugt als vormontierte Anschlagbaueinheit, wie sie vorstehend beschrieben ist. Die mehreren Anschlagbauteile sind zur Erzielung einer möglichst räumlich weitgreifenden Barrierewirkung mit Abstand voneinander angeordnet. Im bevorzugten Falle einer schwenkbaren Verlagerbarkeit der Anschlagbauteile zwischen Sicherungsstellung und Freigabestellung ist wenigstens ein Teil der mehreren Anschlagbauteile, bzw. sind vorzugsweise alle Anschlagbauteile, eines Tablars mit koaxialen Schwenkachsen angeordnet.

Wenngleich im Rahmen der vorliegenden Erfindung daran gedacht sein kann, neben der oben genannten Lösevorrichtung zum Lösen der Positionssicherung der Auszüge des Tablars eine Freigabevorrichtung vorzusehen, um mit dieser die Anschlaganordnung von der Sicherungsstellung in die Freigabestellung zu verlagern, ist dennoch aus Sicherheitsgründen bevorzugt, dass die Anschlaganordnung nur durch Ausübung von Kraft auf die Betätigungsschräge von der Sicherungsstellung in die Freigabestellung verlagerbar ist. Diese Kraftausübung erfolgt in der Regel durch das Einschieben des zu verstauenden Gegenstands entgegen der Auszugsrichtung in das gebildete Fach.

Eine bevorzugte Ausführungsform eines zu verstauenden Gegenstands ist ein Transportkoffer zum Transport von Werkzeugen, Material, Messgeräten und dergleichen. Dieser kann gegen die Vorbelastung der Anschlaganordnung in das Fach eingeschoben werden, sodass der für Transportkoffer übliche Tragegriff zur Vorderseite des Faches weist und zugänglich ist. In diesem Falle kann in besonders bevorzugter Weise das Tablar aus der Verstauungsposition in die Entnahmeposition unter Kraftvermittlung des Transportkoffers und der Anschlaganordnung verstellt werden. Die Bedienperson, gegebenenfalls nach einem Lösen einer Positionssicherung des Tablars, kann den Tragegriff des verstaubten Koffers greifen und zieht diesen in Auszugsrichtung. Die Zugkraft wird durch den Koffer über den Anlageeingriff an der Sicherungsstruktur der Anschlaganordnung bzw. des wenigstens einen Anschlagbauteils auf das Tablar übertragen, sodass das Tablar aus der Verstauungsposition in die Entnahmeposition verstellt wird.

Bevorzugt ist der Gegenstand, insbesondere der Transportbehälter, besonders bevorzugt der Transportkoffer, in der Verstauungsposition des Tablars nicht aus dem gebildeten Fach zu entnehmen. Mit der oben beschriebenen Kraftvermittlung kann jedoch mit einer flüssigen durchgehenden Bewegung der Koffer gegriffen, dass Tablar in die Entnahmeposition ausgezogen und der Koffer vom Tablar abgehoben werden.

Weiter kann im Rahmen der vorliegenden Erfindung daran gedacht sein, durch eine Verriegelungsvorrichtung, welche mit der oben genannten Freigabevorrichtung identisch sein kann, die Anschlaganordnung in die Sicherungsstellung zu verlagern. Bevorzugt ist jedoch die Anschlaganordnung nur durch Ihre Vorbelastung in die Sicherungsstellung von der Freigabestellung in die Sicherungsstellung verlagerbar. Dies ermöglicht eine Ausbildung der vorliegend diskutierten Verstauungsvorrichtung mit einer möglichst geringen Anzahl an Bauteilen ohne irgendeine Einbuße an Sicherheit.

Die vorliegende Erfindung betrifft weiter eine Verstauungsbaugruppe, umfassend eine Verstauungsvorrichtung, wie sie vorstehend beschrieben ist, und ein weiteres Ordnungsbauteil, welches in einem vorbestimmten Abstand über dem Tablar angeordnet ist. Der Aufnahmeraum über der Auflagefläche des Tablars wird somit nach unten durch das Tablar und nach oben durch das weitere Ordnungsbauteil begrenzt.

Ebenso betrifft die vorliegende Erfindung ein Kraftfahrzeug mit einer darin eingebauten Verstauungsvorrichtung oder/und mit einer darin eingebauten Verstauungsbaugruppe, wie sie vorstehend beschrieben sind.

Die vorliegende Erfindung wird nachfolgend anhand der beiliegenden Zeichnungen näher erläutert. Es stellt dar:
- Fig. 1: eine schematische perspektivische Ansicht der Vorderseite einer erfindungsgemäßen Verstauungsbaugruppe mit einer erfindungsgemäßen Verstauungsvorrichtung,
- Fig. 2: die Verstauungsbaugruppe von Fig. 1 in einer schematischen Vorderansicht, wobei Teile der Verstauungsvorrichtung weggeschnitten sind,
- Fig. 3: die teilweise geschnittene Verstauungsbaugruppe von Fig. 2 in einer schematischen Seitenansicht gemäß Blickrichtung III in Fig. 2, und
- Fig. 4: eine schematische Lupenvergrößerung des im Lupenkreis IV von Fig. 3 gelegenen Abschnitts der Verstauungsbaugruppe von Fig. 3.

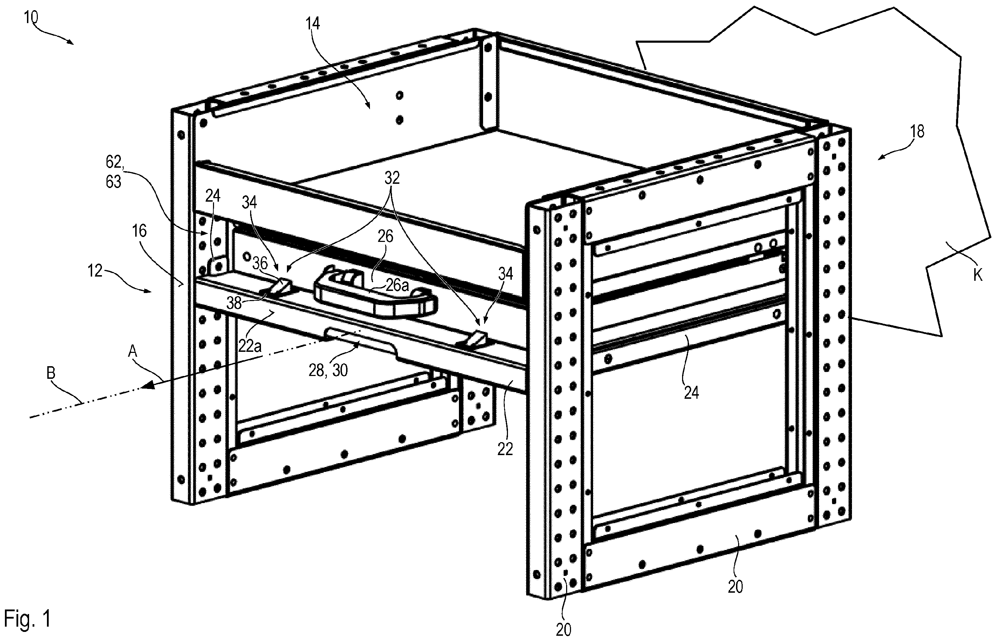

In Figur 1 ist eine schematisch dargestellte Verstauungsbaugruppe zum Einbau in ein Kraftfahrzeug K allgemein mit 10 bezeichnet. Die Verstauungsbaugruppe 10 umfasst eine Verstauungsvorrichtung 12, an welche zusätzlich eine Aufnahmeschale 14 als weiteres Ordnungsbauteil angeordnet ist. In der Regel sind Verstauungsbaugruppen modular aufgebaut und können mit standardisierten Modulen nach Kundenwunsch konfiguriert werden.

Der Betrachter von Figur 1 blickt von schräg oben perspektivisch auf die Vorderseite 16 der Verstauungsbaugruppe 10.

Die Verstauungsbaugruppe 10 umfasst einen Vorrichtungsrahmen 18, welcher im dargestellten Beispiel aus Profilstangen 20 montiert ist. Die Profilstangen 20 bilden Hoch- und Querstreben. Ein Teil des Vorrichtungsrahmens 18 kann abweichend von der Darstellung in Figur 1 durch einen Korpus eines benachbarten Ordnungsbauteils oder durch einen Teil des Rahmens oder der Karosserie des Fahrzeugs K gebildet sein, welches die Verstauungsbaugruppe 10 trägt.

An dem Vorrichtungsrahmen 18 ist unterhalb der Aufnahmeschale 14, mit Abstand von dieser, ein Tablar 22 als ein weiteres Modul angeordnet. Das Tablar 22 ist längs einer in dargestellten Beispiel geradlinigen Auszugsbahn B in Auszugsrichtung A über an sich bekannte Auszüge 24 aus dem Vorrichtungsrahmen 18 ausziehbar und entgegen der Auszugsrichtung A in den Vorrichtungsrahmen 18 einfahrbar. In Figur 1 ist das Tablar 22 in der in dem Vorrichtungsrahmen 18 eingefahrenen Verstauungsposition dargestellt. Das Tablar 22 weist an jedem seiner Seitenränder je einen Auszug 24 auf. Von dem in Figur 1 der bei Betrachtung der Vorderseite 16 linken Auszug 24 ist in Figur 1 nur eine Befestigungslasche zur Anbringung des linken Auszug 24 am Vorrichtungsrahmen 18 zu erkennen.

Auf dem Tablar 22 liegt in den Figuren 1 bis 4 beispielhaft ein Transportkoffer 26 zum Transport von Werkzeugen, Material, Messgeräten, sonstigen Geräten und dergleichen, als beispielhafter Gegenstand auf.

In der Quermitte einer Front 22a des Tablars 22, an deren Unterseite, ist eine Ausnehmung 28 ausgebildet, durch welche eine Lösevorrichtung 30 erreichbar und betätigbar ist, durch deren Betätigung eine in den Figuren nicht dargestellte Verriegelung der Auszüge 24 wenigstens in der Verstauungsposition lösbar ist.

Die Front 22a bildet bei der Verstellung des Tablars 22 von der Verstauungsposition in die Entnahmeposition einen in der Auszugsrichtung A vorauseilenden Rand des Tablars 22 und ist somit Teil eines in der Auszugsrichtung A vorauseilenden Endbereichs des Tablars 22.

Die Verstauungsvorrichtung 12 weist eine nachfolgend noch detaillierter beschriebene Anschlaganordnung 32 auf, welche den Transportkoffer 26 in dem zur Vorderseite 16 hin grundsätzlich offenen Tablar 22 zurückhält und gegen ein Herausrutschen in Auszugsrichtung A sichert. Die Anschlaganordnung 32 umfasst im dargestellten Beispiel zwei identische vormontierte Anschlagbaueinheiten 34, welche symmetrisch um die Quermitte des Tablars 22 verteilt angeordnet sind. Aufgrund der Identität der beiden Anschlagbaueinheiten 34 reicht nachfolgend die die Beschreibung einer Anschlagbaueinheit 34 aus, deren Beschreibung auch für die jeweils andere Anschlagbaueinheit 34 gilt. Jede Anschlagbaueinheit 34 umfasst ein Anschlagbauteil 36, welches in einem in Figur 1 nur unvollständig zu erkennenden Anschlaggehäuse 38 aufgenommen und in die in Figur 1 gezeigte Sicherungsstellung vorgespannt ist.

Nach einem Lösen der Positionssicherung des Tablars 22 durch Betätigung der Lösevorrichtung 30 kann das Tablar 22 entweder durch Hintergreifen der Front 22a des Tablars 22 unmittelbar oder durch Handangriff an dem Handgriff 26a des Transportkoffers 26 mittelbar unter Kraftvermittlung der Anschlaganordnung 32 in Auszugsrichtung A aus der in Figur 1 gezeigten Verstauungsposition in eine Entnahmeposition aus dem Vorrichtungsrahmen 18 ausgezogen werden, in welcher der Transportkoffer 26 nicht länger durch die Aufnahmeschale 14 bedeckt ist und vom Tablar 22 abgehoben werden kann.

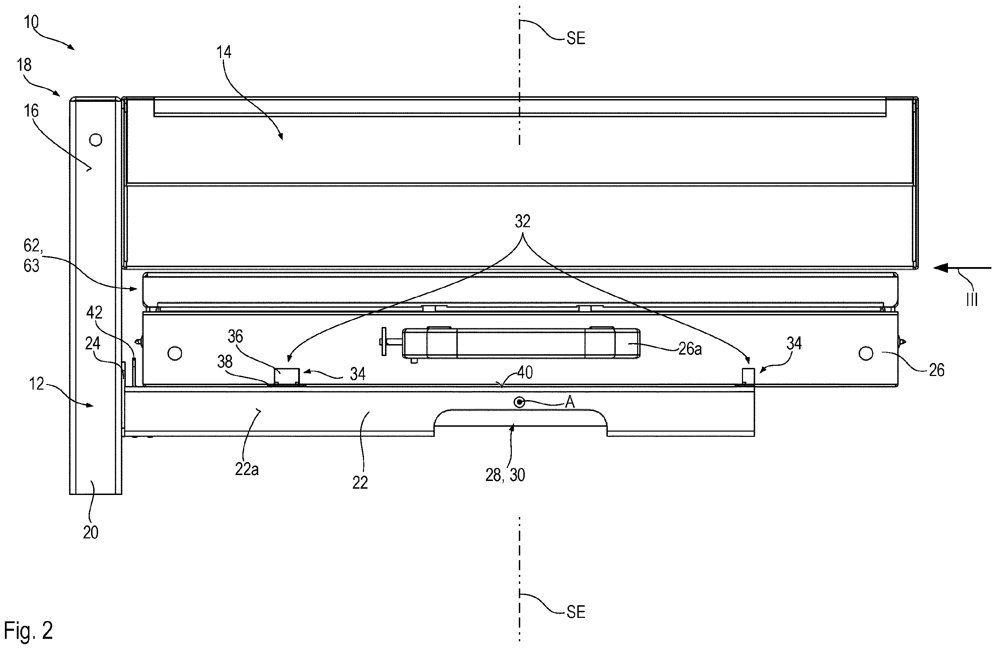

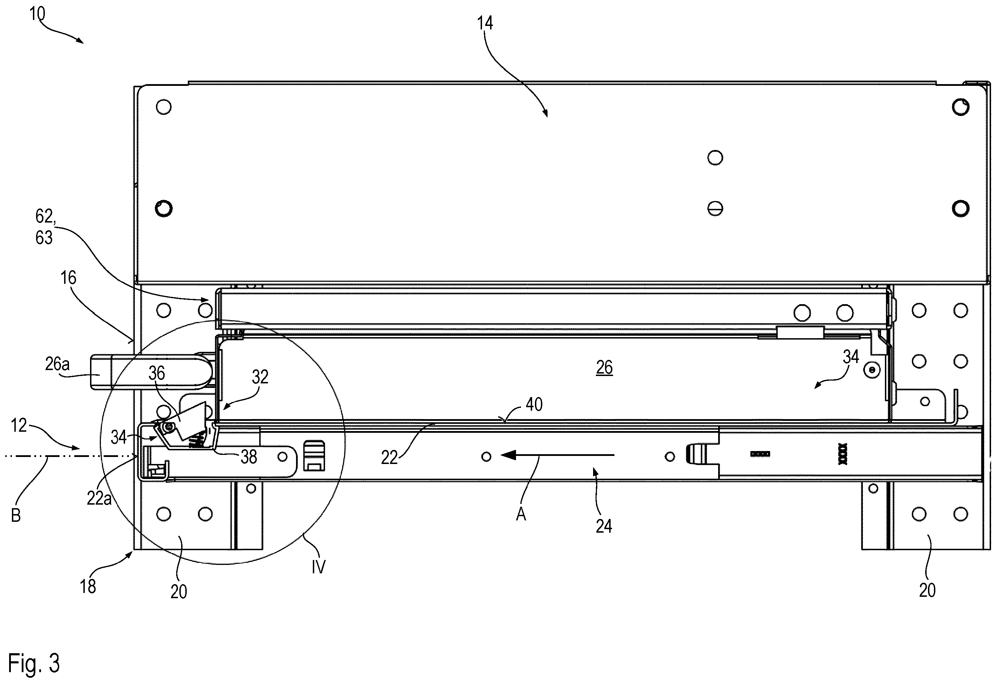

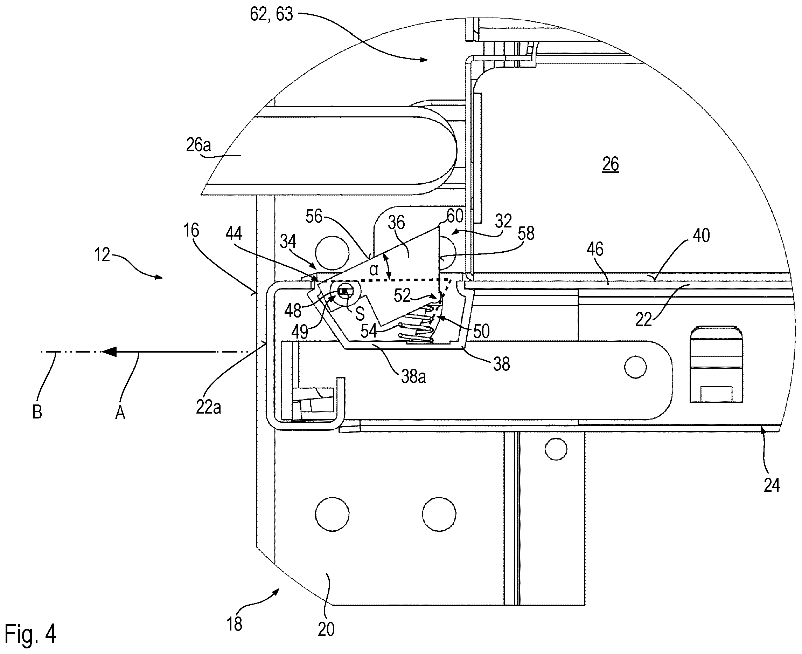

In Figur 2 ist die Verstauungsbaugruppe 10 von Figur 1 in schematischer Vorderansicht mit Blickrichtung entgegen der Auszugsrichtung A gezeigt. Jene Bauteile und Bauteilabschnitte, welche in den Teilschnittansichten der Figuren 3 und 4 vor der Schnittebene liegen, sind auch in Figur 2 nicht dargestellt.

Das Tablar 22 weist eine bevorzugt ebene Auflagefläche 40 auf, auf welcher der verstaute Transportkoffer 26 aufliegt.

Das Tablar 22 ist im Wesentlichen spiegelsymmetrisch bezüglich einer durch die Quermitte des Tablars 22 in Richtung der Auszugsrichtung A und orthogonal zur Auflagefläche 40 verlaufenden Spiegelsymmetrieebene SE ausgebildet und am Vorrichtungsrahmen 18 angeordnet. Abweichend von der spiegelsymmetrischen Anordnung kann eine durch die Lösevorrichtung 30 lösbare Positionssicherung nur an einem der Auszüge 24 ausgebildet sein.

Eine in Höhenrichtung von der Auflagefläche 40 abstehende und orthogonal zur Zeichenebene von Figur 2 verlaufende Leiste 42 begrenzt den Bewegungsraum des Transportkoffers 26 auf der Auflagefläche 40 und verhindert als körperliche Barriere einen Kontakt des Transportkoffers 26 mit dem Vorrichtungsrahmen 18.

Figur 3 zeigt die Verstauungsbaugruppe 10 von Figur 2 entlang der Blickrichtung des Pfeils III von Figur 2. Figur 4 zeigt die eine Lupenvergrößerung des Lupenkreises IV von Figur 3.

Wie vor allem Figur 4 zeigt, ist das Anschlaggehäuse 38 in einer Durchgangsöffnung 44 jener Wand 46 des Tablars 22 angeordnet, deren nach oben weisende Oberfläche auch die Auflagefläche 40 ausbildet. Das Anschlaggehäuse 38 verjüngt sich daher zu seinem Boden 38a hin, um eine Einführung durch die Durchgangsöffnung 44 hindurch zu erleichtern. Das Anschlaggehäuse 38 weist Ausnehmungen auf, in welche ein Randbereich der Durchgangsöffnung 44 zumindest an den die Durchgangsöffnung 44 in und entgegen der Auszugsrichtung A begrenzenden Rändern verrastend eingreift. Dadurch ist das Anschlaggehäuse 38 und somit die Anschlagbaueinheit 34 nach einem einfachen Montagevorgang formschlüssig am Tablar 22 festgelegt.

Im Anschlaggehäuse 38 ist das, vorzugsweise, etwa durch Spritzgießen oder Blechumformung, einstückig ausgebildete, Anschlagbauteil 36 durch eine zur Zeichenebene der Figuren 3 und 4 orthogonale körperliche Schwenkachse 48 zur schwenkbaren Verstellung zwischen der in den Figuren 3 und 4 mit durchgezogener Linie dargestellten Sicherungsstellung und der in Figur 4 strichliniert angedeuteten Freigabestellung gelagert. Die körperliche Schwenkachse 48 definiert eine sie zentral durchsetzende virtuelle Schwenkachse S und ist wesentlicher Bestandteil eines Schwenkgelenks 49 des Anschlagbauteils 36. Die Schwenkachse S verläuft parallel zur Auflagefläche 40 und im dargestellten Ausführungsbeispiel auch parallel zur Front 22a des Tablars 22. Sowohl die Front 22a als auch die Auflagefläche 40 verlaufen in Figur 4 parallel zu deren Zeichenebene.

Das Anschlagbauteil 36 ist aus der in den Figuren 1 bis 4 dargestellten Sicherungsstellung als einer Endstellung bei Betrachtung des Anschlagbauteils 36 in Figur 4 im Uhrzeigersinn bis zu der in Figur 4 strichliniert dargestellten Freigabestellung als der anderen Endstellung verschwenkbar. In wenigstens einer Seitenwand des wannenartig ausgebildeten Anschlagsgehäuses 38 ist eine Bewegungskulisse 50 in Gestalt einer teilkreisförmigen, die Seitenwand durchsetzenden Nut ausgebildet, in welche ein vom Anschlagbauteil 36 orthogonal zur Zeichenebene der Figur 4 abstehender Zapfenstumpf 52 einragt bzw. welche der Zapfenstumpf 52 durchsetzt.

Eine am Boden 38a des Anschlaggehäuse 38 abgestützte Schraubenfeder 54 spannt das Anschlagbauteil 36 in die Sicherungsstellung vor. Die konkrete Vorspannsituation ist lediglich schematisch dargestellt.

Das Anschlagbauteil 36 weist eine in der Sicherungsstellung in die Auszugsrichtung A weisende Betätigungsschräge 56 und eine in der Sicherungsstellung entgegen die Auszugsrichtung A weisende Sicherungsflanke 58 als Sicherungsstruktur auf. Beide Flächen, also die Betätigungsschräge 56 und die Sicherungsflanke 58, sind im dargestellten Beispiel eben und erstrecken sich orthogonal zur Zeichenebene von Figur 4. Abweichend von der Darstellung von Figur 4 kann eine der Flächen oder können beide Flächen gekrümmt ausgebildet sein.

In der Sicherungsstellung ist die Betätigungsschräge 56 um einen Winkel α gegenüber der Auflagefläche 40 geneigt, wobei der Winkel α vorzugsweise zwischen 18° und 32° beträgt. Im dargestellten Ausführungsbeispiel beträgt der Winkel α 25°.

Die Sicherungsflanke 58 schließt mit der Auflagefläche 40 in der Sicherungsstellung des Anschlagbauteils 36 einen Winkel von bevorzugt nicht mehr als 100° ein, um zu verhindern, dass durch einen Anlageeingriff der Vorderseite des Transportkoffers 26 mit der Sicherungsflanke 58 bei Ziehen des Transportkoffers in Auszugsrichtung A auf das Anschlagbauteil 36 ein mehr als nur vernachlässigbares Verlagerungsmoment zur Freigabestellung hin wirkt.

Ist der von der Sicherungsflanke 58 mit der Auflagefläche 40 eingeschlossene Winkel kleiner als 90° oder zumindest kleiner als 85°, liegt der Transportkoffer 26 bei einer Bewegung in Auszugsrichtung relativ zur Auflagefläche 40 nicht mehr flächig an der Sicherungsflanke 58, sondern an der zwischen Betätigungsschräge 56 und Sicherungsflanke 58 gebildeten Kante 60 an, die dann als Sicherungsstruktur dient und den Bewegungsraum des Transportkoffers 26 relativ zur Auflagefläche 40 in Auszugsrichtung A begrenzt.

Bevorzugt ist das Anschlagbauteil 36 nur durch die Schraubenfeder 54 in die Sicherungsstellung vorgespannt und ist nur durch Druck auf die Betätigungsschräge 56 gegen die Vorbelastung der Schraubenfeder 54 in die Freigabestellung verlagerbar. Dadurch kann der Transportkoffer 26 in dem zwischen Tablar 22, Aufnahmeschale 14 und dem Vorrichtungsrahmen 18 gebildeten Fach 62 mit über der Aufnahmefläche 40 gelegenem Aufnahmeraum 63 (siehe auch Figur 1) durch bloßes Einschieben entgegen der Auszugsrichtung A in das Fach 62 auf dem Tablar 22 verstaut werden. Dabei verdrängt der Transportkoffer 26 während des Einschiebens in das Fach 62 das Anschlagbauteil 36 in die Freigabestellung oder nahe derselben. Dann, wenn der Transportkoffer 26 das Anschlagbauteil 36 passiert hat, bewegt sich das Anschlagbauteil 36 selbsttätig aufgrund der Vorbelastung durch die Schraubenfeder 54 zurück in die Sicherungsstellung.

Die über dem Tablar 22 als weiteres Ordnungsbauteil gelegene Aufnahmeschale 14 begrenzt den Aufnahmeraum 63 des Fachs 62 körperlich nach oben und verhindert eine Entnahme des Transportkoffers 26 aus dem Fach 62 dann, wenn sich das Tablar 22 in der Verstauungsposition befindet. Der Transportkoffer 26 kann dann nur vom Tablar 22 entnommen werden, wenn das Tablar 22 zuvor in die Entnahmeposition oder soweit in Richtung der Entnahmeposition bewegt wird, dass der Transportkoffer 26 an seinem den Handgriff 26a tragenden Endbereich über die vorstehende Kante 60 des Anschlagbauteils 36 angehoben und an diesem vorbei bewegt werden kann.

Das Tablar 22 muss jedoch nicht mehr in die ausgezogene Entnahmeposition verbracht werden, um den Transportkoffer 26 - oder einen anderen Gegenstand - auf dem Tablar 22 anzuordnen und im Fach 62 zu verstauen, wenngleich dies auch weiterhin nicht ausgeschlossen ist.

## Patentansprüche

1. Verstauungsvorrichtung (12) zur entnehmbaren Verstauung eines Gegenstands (26) in Kraftfahrzeugen (K), wobei die Verstauungsvorrichtung (12) umfasst:
- einen Vorrichtungsrahmen (18) und
- ein an dem Vorrichtungsrahmen (18) beweglich angeordnetes Tablar (22),
wobei das Tablar (22) eine Auflagefläche (40) zur Auflage eines Gegenstands (26) bereitstellt und längs einer Auszugsbahn (B) zwischen einer aus dem Vorrichtungsrahmen (18) ausgezogenen Entnahmeposition und einer in den Vorrichtungsrahmen (18) eingefahrenen Verstauungsposition verstellbar ist, wobei eine Auszugsrichtung (A) in Richtung von der Verstauungsposition zur Entnahmeposition des Tablars (22) verläuft, wobei das Tablar (22) zur Begrenzung einer Bewegung eines auf die Auflagefläche (40) aufgelegten Gegenstands (26) relativ zur Auflagefläche in die Auszugsrichtung (A) in einem bei Verstellung in Auszugsrichtung (A) vorauseilenden Endbereich des Tablars (22) eine über die Auflagefläche (40) hinaus vorstehende körperliche Anschlaganordnung (32) aufweist,
**dadurch gekennzeichnet, dass** die Anschlaganordnung (32) relativ zur Auflagefläche (40) verlagerbar ist zwischen einer stärker vorstehenden Sicherungsstellung und einer weniger stark vorstehenden Freigabestellung.

2. Verstauungsvorrichtung (12) nach Anspruch 1,
**dadurch gekennzeichnet, dass** die Anschlaganordnung (32) in die Sicherungsstellung vorbelastet ist.

3. Verstauungsvorrichtung (12) nach Anspruch 1 oder 2,
**dadurch gekennzeichnet, dass** die Anschlaganordnung (32) in der Sicherungsstellung eine in die Auszugsrichtung (A) weisende Betätigungsschräge (56) und eine entgegen der Auszugsrichtung (A) weisende Sicherungsstruktur (58) aufweist.

4. Verstauungsvorrichtung (12) nach den Ansprüchen 2 und 3,
**dadurch gekennzeichnet, dass** in der Sicherungsstellung der Anschlaganordnung (32) die Steigung der Betätigungsschräge (56) und die Gestalt der Sicherungsstruktur (58) einerseits und die Belastungswirkung der Anschlaganordnung (32) in die Sicherungsstellung andererseits derart abgestimmt sind, dass ein Kraftbetragsbereich existiert, für den gilt, dass die Anschlaganordnung (32) durch eine Ausübung einer Kraft auf die Betätigungsschräge (56) entgegen der Auszugsrichtung (A) mit einem in dem Kraftbetragsbereich liegenden Kraftbetrag aus der Sicherungsstellung in die Freigabestellung verlagerbar ist, durch Ausübung einer betragsgleichen entgegengesetzt gerichteten Kraft auf die Sicherungsstruktur (58) jedoch nicht.

5. Verstauungsvorrichtung (12) nach Anspruch 3 oder 4,
**dadurch gekennzeichnet, dass** die Sicherungsstruktur (58) eine Kante (60), ein Rand oder eine Sicherungsflanke (58) eines Anschlagbauteils (36) ist, wobei die Sicherungsflanke (58) in der Sicherungsstellung der Anschlaganordnung (32) bezüglich der Auflagefläche (40) eine betragsmäßig größere Steigung aufweist als die die Betätigungsschräge (56).

6. Verstauungsvorrichtung (12) nach einem der vorhergehenden Ansprüche, unter Einbeziehung des Anspruchs 3,
**dadurch gekennzeichnet, dass** die Anschlaganordnung (32) wenigstens ein Anschlagbauteil (36) umfasst, wobei das Anschlagbauteil die Betätigungsschräge (56) und die Sicherungsstruktur (58) aufweist, und wobei das Anschlagbauteil (36) zwischen der Sicherungsstellung und der Freigabestellung um eine Schwenkachse (S) schwenkbar verlagerbar ist.

7. Verstauungsvorrichtung (12) nach Anspruch 6,
**dadurch gekennzeichnet, dass** ein Schwenkgelenk (49) des Anschlagbauteils (36) unabhängig von der Betriebsstellung der Anschlaganordnung (32) näher bei einem in Auszugsrichtung (A) vorauseilenden Rand (22a) des Tablars (22) gelegen ist als die Sicherungsstruktur (58).

8. Verstauungsvorrichtung (12) nach Anspruch 6 oder 7,
**dadurch gekennzeichnet, dass** das Anschlagbauteil (36) in eine Öffnung (44) im Tablar (22) eingesetzt ist.

9. Verstauungsvorrichtung (12) nach einem der Ansprüche 6 bis 8,
**dadurch gekennzeichnet, dass** die Anschlaganordnung (32) wenigstens ein Anschlaggehäuse umfasst, in welchem das Anschlagbauteil (36) um seine Schwenkachse (S) schwenkbar aufgenommen ist.

10. Verstauungsvorrichtung (12) nach Anspruch 9,
**dadurch gekennzeichnet, dass** die Anschlaganordnung (32) wenigstens eine vormontierte Anschlagbaueinheit (34) umfasst, welche wenigstens das Anschlaggehäuse (38), das Anschlagbauteil (36), ein Vorspannmittel (54) zur Vorbelastung des Anschlagbauteils (36) in die Sicherungsstellung und eine Bewegungsbegrenzung (50, 52) zur Begrenzung einer Relativbewegung des Anschlagbauteils (36) relativ zum Anschlaggehäuse (38) aufweist.

11. Verstauungsvorrichtung (12) nach einem der vorhergehenden Ansprüche, unter Einbeziehung des Anspruchs 3,
**dadurch gekennzeichnet, dass** die Anschlaganordnung (32) nur durch Ausübung von Kraft auf die Betätigungsschräge (56) von der Sicherungsstellung in die Freigabestellung verlagerbar ist.

12. Verstauungsvorrichtung (12) nach einem der vorhergehenden Ansprüche, unter Einbeziehung des Anspruchs 2,
**dadurch gekennzeichnet, dass** die Anschlaganordnung (32) nur durch Ihre Vorbelastung in die Sicherungsstellung von der Freigabestellung in die Sicherungsstellung verlagerbar ist.

13. Verstauungsbaugruppe (10), umfassend eine Verstauungsvorrichtung (12) nach einem der vorhergehenden Ansprüche und ein weiteres Ordnungsbauteil (14), welches in einem vorbestimmten Abstand über dem Tablar (22) angeordnet ist.

14. Kraftfahrzeug (K) mit einer darin eingebauten Verstauungsvorrichtung (12) nach einem der Ansprüche 1 bis 12 oder/und mit einer Verstauungsbaugruppe (10) nach Anspruch 13.

## Claims

1. Storage device (12) for removable storage of an object (26) in motor vehicles (K), the storage device (12) comprising:
- a device frame (18), and
- a tray (22) movably arranged on the device frame (18),
wherein the tray (22) provides a support surface (40) for supporting an object (26) and is displaceable along a pull-out path (B) between a removal position pulled out of the device frame (18) and a storage position retracted into the device frame (18), wherein a pull-out direction (A) extends from the storage position toward the removal position of the tray (22), wherein, in order to limit movement of an object (26) placed on the support surface (40) relative to the support surface in the pull-out direction (A), the tray (22) has, in an end region of the tray (22) that leads during displacement in the pull-out direction (A), a physical stop arrangement (32) projecting beyond the support surface (40),
**characterized in that** the stop arrangement (32) is displaceable relative to the support surface (40) between a more strongly projecting securing position and a less strongly projecting release position.

2. Storage device (12) according to claim 1,
**characterized in that** the stop arrangement (32) is preloaded into the securing position.

3. Storage device (12) according to claim 1 or 2,
**characterized in that** the stop arrangement (32), in the securing position, has an actuating ramp (56) facing in the pull-out direction (A) and a securing structure (58) facing counter to the pull-out direction (A).

4. Storage device (12) according to claims 2 and 3,
**characterized in that**, in the securing position of the stop arrangement (32), the gradient of the actuating ramp (56) and the shape of the securing structure (58) on the one hand, and the loading action of the stop arrangement (32) into the securing position on the other hand, are matched such that there exists a force-magnitude range for which applies: the stop arrangement (32) is displaceable from the securing position into the release position by applying, to the actuating ramp (56) counter to the pull-out direction (A), a force of a force magnitude lying within the force-magnitude range, but is not so displaceable by applying an oppositely directed force of equal magnitude to the securing structure (58).

5. Storage device (12) according to claim 3 or 4,
**characterized in that** the securing structure (58) is an edge (60), a rim, or a securing flank (58) of a stop member (36), wherein the securing flank (58), in the securing position of the stop arrangement (32), has a gradient relative to the support surface (40) that is greater in magnitude than that of the actuating ramp (56).

6. Storage device (12) according to any of the preceding claims, including claim 3,
**characterized in that** the stop arrangement (32) comprises at least one stop member (36), the stop member having the actuating ramp (56) and the securing structure (58), and the stop member (36) being pivotably displaceable about a pivot axis (S) between the securing position and the release position.

7. Storage device (12) according to claim 6,
**characterized in that** a pivot joint (49) of the stop member (36), irrespective of the operating position of the stop arrangement (32), is located closer to a rim (22a) of the tray (22) that leads in the pull-out direction (A) than is the securing structure (58).

8. Storage device (12) according to claim 6 or 7,
**characterized in that** the stop member (36) is inserted into an opening (44) in the tray (22).

9. Storage device (12) according to any one of claims 6 to 8,
**characterized in that** the stop arrangement (32) comprises at least one stop housing in which the stop member (36) is pivotably accommodated about its pivot axis (S).

10. Storage device (12) according to claim 9,
**characterized in that** the stop arrangement (32) comprises at least one preassembled stop unit (34) comprising at least the stop housing (38), the stop member (36), a biasing means (54) for preloading the stop member (36) into the securing position, and a movement limitation (50, 52) for limiting relative movement of the stop member (36) relative to the stop housing (38).

11. Storage device (12) according to any of the preceding claims, including claim 3,
**characterized in that** the stop arrangement (32) is displaceable from the securing position into the release position only by applying force to the actuating ramp (56).

12. Storage device (12) according to any of the preceding claims, including claim 2,
**characterized in that** the stop arrangement (32) is displaceable from the release position into the securing position only by its preload into the securing position.

13. Storage assembly (10), comprising a storage device (12) according to any of the preceding claims and a further organizing component (14) arranged at a predetermined distance above the tray (22).

14. Motor vehicle (K) having a storage device (12) according to any one of claims 1 to 12 installed therein, and/or having a storage assembly (10) according to claim 13.

## Revendications

1. Dispositif de rangement (12) pour le rangement amovible d'un objet (26) dans des véhicules automobiles (K), le dispositif de rangement (12) comprenant :
- un châssis de dispositif (18), et
- un plateau (22) agencé de manière mobile sur le châssis de dispositif (18),
dans lequel le plateau (22) fournit une surface d'appui (40) pour supporter un objet (26) et est déplaçable le long d'une trajectoire de sortie (B) entre une position de retrait sortie du châssis de dispositif (18) et une position de rangement rentrée dans le châssis de dispositif (18), dans lequel une direction de sortie (A) s'étend de la position de rangement vers la position de retrait du plateau (22), dans lequel, afin de limiter un mouvement d'un objet (26) posé sur la surface d'appui (40) par rapport à la surface d'appui dans la direction de sortie (A), le plateau (22) présente, dans une région d'extrémité du plateau (22) qui est en tête lors du déplacement dans la direction de sortie (A), un agencement de butée matériel (32) faisant saillie au-delà de la surface d'appui (40),
**caractérisé en ce que** l'agencement de butée (32) est déplaçable par rapport à la surface d'appui (40) entre une position de sécurisation faisant saillie plus fortement et une position de dégagement faisant saillie moins fortement.

2. Dispositif de rangement (12) selon la revendication 1,
**caractérisé en ce que** l'agencement de butée (32) est préchargé vers la position de sécurisation.

3. Dispositif de rangement (12) selon la revendication 1 ou 2,
**caractérisé en ce que** l'agencement de butée (32), dans la position de sécurisation, présente une rampe d'actionnement (56) orientée dans la direction de sortie (A) et une structure de sécurisation (58) orientée à l'encontre de la direction de sortie (A).

4. Dispositif de rangement (12) selon les revendications 2 et 3,
**caractérisé en ce que**, dans la position de sécurisation de l'agencement de butée (32), la pente de la rampe d'actionnement (56) et la forme de la structure de sécurisation (58), d'une part, et l'effet de charge de l'agencement de butée (32) vers la position de sécurisation, d'autre part, sont accordés de telle sorte qu'il existe une plage de valeur de force pour laquelle l'agencement de butée (32) est déplaçable de la position de sécurisation vers la position de dégagement par application, sur la rampe d'actionnement (56) à l'encontre de la direction de sortie (A), d'une force ayant une valeur de force se situant dans la plage de valeur de force, mais ne l'est pas par application d'une force de valeur égale dirigée en sens opposé sur la structure de sécurisation (58).

5. Dispositif de rangement (12) selon la revendication 3 ou 4,
**caractérisé en ce que** la structure de sécurisation (58) est une arête (60), un bord ou un flanc de sécurisation (58) d'un composant de butée (36), dans lequel le flanc de sécurisation (58), dans la position de sécurisation de l'agencement de butée (32), présente, par rapport à la surface d'appui (40), une pente dont la valeur absolue est supérieure à celle de la rampe d'actionnement (56).

6. Dispositif de rangement (12) selon l'une quelconque des revendications précédentes, y compris la revendication 3,
**caractérisé en ce que** l'agencement de butée (32) comprend au moins un composant de butée (36), dans lequel le composant de butée présente la rampe d'actionnement (56) et la structure de sécurisation (58), et dans lequel le composant de butée (36) est déplaçable de manière pivotante autour d'un axe de pivotement (S) entre la position de sécurisation et la position de dégagement.

7. Dispositif de rangement (12) selon la revendication 6,
**caractérisé en ce qu'**une articulation de pivotement (49) du composant de butée (36), indépendamment de la position de fonctionnement de l'agencement de butée (32), est située plus près d'un bord (22a) du plateau (22) qui est en tête dans la direction de sortie (A), que ne l'est la structure de sécurisation (58).

8. Dispositif de rangement (12) selon la revendication 6 ou 7,
**caractérisé en ce que** le composant de butée (36) est inséré dans une ouverture (44) dans le plateau (22).

9. Dispositif de rangement (12) selon l'une quelconque des revendications 6 à 8, **caractérisé en ce que** l'agencement de butée (32) comprend au moins un boîtier de butée dans lequel le composant de butée (36) est reçu de manière pivotante autour de son axe de pivotement (S).

10. Dispositif de rangement (12) selon la revendication 9,
**caractérisé en ce que** l'agencement de butée (32) comprend au moins un ensemble de butée (34) prémonté, lequel présente au moins le boîtier de butée (38), le composant de butée (36), un moyen de précontrainte (54) pour précharger le composant de butée (36) vers la position de sécurisation, et une limitation de mouvement (50, 52) pour limiter un mouvement relatif du composant de butée (36) par rapport au boîtier de butée (38).

11. Dispositif de rangement (12) selon l'une quelconque des revendications précédentes, y compris la revendication 3,
**caractérisé en ce que** l'agencement de butée (32) n'est déplaçable de la position de sécurisation vers la position de dégagement que par application d'une force sur la rampe d'actionnement (56).

12. Dispositif de rangement (12) selon l'une quelconque des revendications précédentes, y compris la revendication 2,
**caractérisé en ce que** l'agencement de butée (32) n'est déplaçable de la position de dégagement vers la position de sécurisation que par sa précharge vers la position de sécurisation.

13. Ensemble de rangement (10), comprenant un dispositif de rangement (12) selon l'une quelconque des revendications précédentes et un autre composant d'organisation (14), lequel est agencé à une distance prédéterminée au-dessus du plateau (22).

14. Véhicule automobile (K) comprenant un dispositif de rangement (12) selon l'une quelconque des revendications 1 à 12 installé à l'intérieur de celui-ci, et/ou comprenant un ensemble de rangement (10) selon la revendication 13.
